# EUROPÄISCHE PATENTSCHRIFT

(11) **EP 0 590 281 B1**
(45) Veröffentlichungstag und Bekanntmachung des Hinweises auf die Patenterteilung: **03.04.1996**
(21) Anmeldenummer: 93112750.0
(22) Anmeldetag: 09.08.1993
(51) Int. Cl.: B62B 5/04, A61G 5/10

(54) **Feststellbremse für einen Rollstuhl**
Parking brake for wheelchair
Frein de stationnement pour fauteuil roulant

(30) Priorität: 16.09.1992 CH 2921/92
(43) Veröffentlichungstag der Anmeldung: 06.04.1994
(73) Patentinhaber: PARATEC AG, 4123 Allschwil (CH)
(72) Erfinder: Küschall, Rainer, 4123 Allschwill (CH)
(74) Vertreter: OK pat AG

(56) Entgegenhaltungen:
- EP-A- 0 204 040
- FR-A- 956 405
- FR-A- 1 491 258
- GB-A- 1 139 796
- GB-A- 2 140 108
- US-A- 4 691 933

## Beschreibung

Die Erfindung betrifft eine Feststellbremse für einen Rollstuhl, mit einem auf ein Rollstuhl-Hinterrad wirkenden, stabförmigen Bremsglied und einem Stellhebel, die je drehbar an einem mit einem Rahmenteil des Rollstuhls verbundenen Halter gelagert sind und die derart zusammenwirken, dass bei Betätigung des Stellhebels das Bremsglied aus einer Bremsstellung in eine Freigabestellung und umgekehrt bewegt wird, wobei das Bremsglied in der Bremsstellung etwa parallel und in der Freigabestellung etwa senkrecht zur Achse des Hinterrades verläuft.

Derartige Feststellbremsen werden für die Arretierung von Rollstühlen in der Ruheposition verwendet. Es sind Feststellbremsen an Rollstühlen bekannt, die über ein Hebelgestänge betätigt werden, wobei das mit einer Kordelung versehene, stabförmige Bremsglied sowohl in der Bremsstellung als auch in der Freigabestellung parallel zur Drehachse des betreffenden Rades verläuft, und zwar bei gelüfteter Bremse in nur geringem Abstand zum Radreifen. Da die Bremse so am Rahmen des Rollstuhls angebracht sein muss, dass vom behinderten Fahrer der Stellhebel leicht mit der Hand erreichbar ist, besteht die Gefahr, dass es beim Antrieb der Räder von Hand zu Verletzungen durch das Bremsglied kommt.

Es sind deshalb auch Feststellbremsen für Rollstühle entwickelt worden, bei denen das Bremsglied eine Schwenkbewegung ausführt, so dass es in der Freigabestellung neben dem Hinterrad etwa senkrecht zu dessen Drehachse verläuft. Hierdurch soll vermieden werden, dass beim Antreiben des Hinterrades das Bremsglied unbeabsichtigt berührt werden kann.

Eine derartige, bekannte Feststellbremse ist mittels einer Klemmbride direkt am Rahmen des Rollstuhls angebracht. Hierbei dient die für das Klemmen der Bride vorhandene Schraube gleichzeitig der Lagerung des Stellhebels. Der letztere weist in einer mit dem Bremsglied zusammenwirkenden Platte einen kreisbogenförmigen Schlitz auf, in welchem das Bremsglied geführt ist, um es bei Betätigung des Stellhebels von der Bremsstellung in die Freigabestellung zu bewegen. Dabei läuft das Bremsglied von einem Ende des Schlitzes zu dessen anderem Ende und dient damit gleichzeitig als Anschlag für die beiden Endstellungen des Stellhebels. Das aus Rundstahl bestehende Bremsglied ist zweifach in drei räumlich senkrecht zueinander stehenden Richtungen abgebogen. Ein Ende ist drehbar direkt in der Klemmbride gelagert. Bei dieser Feststellbremse wird der Stellhebel lediglich durch Schwerkraft bzw. Reibung am genannten Schlitz in den Endstellungen gehalten, was zu Unbestimmtheiten bei der Betätigung führt. Für die Führung des Bremsgliedes mittels des Schlitzes weisen der Schlitz und auch das Lager des Bremsgliedes erhebliches Spiel auf, so dass am Lager Verkantungen und damit erhöhter Verschleiss kaum auszuschliessen sind. Die Lage der Klemmbride am Rahmen ist bei dieser Feststellbremse durch die notwendige Lage des Bremsgliedes zum Rollstuhl-Hinterrad bestimmt, also nicht wählbar und je nach Raddurchmesser verschieden. Ausserdem ist eine Anpassung der Lage des Bremsgliedes an verschiedene Lagen des Rollstuhl-Hinterrades zum Rahmen - z.B. in axialer Richtung oder bezüglich Radsturz (Fahrgeometrie) - nur sehr beschränkt möglich.

Der Erfindung liegt die Aufgabe zugrunde, eine Feststellbremse der eingangs genannten Art vorzuschlagen, die vorstehend genannte Nachteile nicht aufweist, eine saubere Führung des Bremsgliedes mit definierten Endstellungen gewährleistet und insbesondere eine von der Soll-Lage des Bremsgliedes unabhängige Lage der Klemmbride ermöglicht.

Diese Aufgabe wird durch die im Patentanspruch 1 gekennzeichnete Erfindung gelöst. Demnach ist ein zylindrischer, zum Rahmenteil paralleler Träger über eine Doppelklemmbride längsverschiebbar und schwenkbar mit dem Rahmenteil verbunden. Am einen Ende des zylindrischen Trägers sind das Bremsglied und der Stellhebel drehbar gelagert. Ein mit dem Bremsglied zusammenwirkender Arm des Stellhebels weist zwei Ausnehmungen auf, wobei das Bremsglied in der Bremsstellung in die eine und in der Freigabestellung in die andere Ausnehmung einrastet; mittels einer Feder ist das Bremsglied gegen die genannten Ausnehmungen hin vorgespannt.

Die mit der Erfindung erzielten Vorteile sind darin zu sehen, dass die Feststellbremse bzw. dessen Klemmbride weitgehend unabhängig von der Soll-Lage des Bremsgliedes am Rahmen des Rollstuhls befestigt werden kann, so dass für die Festlegung der Position der Doppelklemmbride andere Gesichtspunkte berücksichtigt werden können. Ein weiterer Vorteil liegt darin, dass durch Verschieben des zylindrischen Trägers und Schwenken der Doppelklemmbride das Bremsglied genau der jeweiligen Lage des Hinterrades angepasst werden kann, so dass eventuelle Abweichungen ausgeglichen werden können. Durch die besondere Ausgestaltung des Stellhebels und die Federeinwirkung auf das Bremsglied werden genau definierte, sichere Endstellungen des Bremsgliedes erreicht.

Im folgenden wird die Erfindung anhand eines Ausführungsbeispiels in Verbindung mit der Zeichnung näher erläutert. Es zeigen:
- Fig. 1: eine Seitenansicht der erfindungsgemässen Feststellbremse in der Freigabestellung,
- Fig. 2: eine Vorderansicht der Feststellbremse gemäss Fig. 1,
- Fig. 3: eine perspektivische Darstellung der Feststellbremse gemäss Fig. 1, und
- Fig. 4: eine Variante des Bremsgliedes in der Draufsicht.

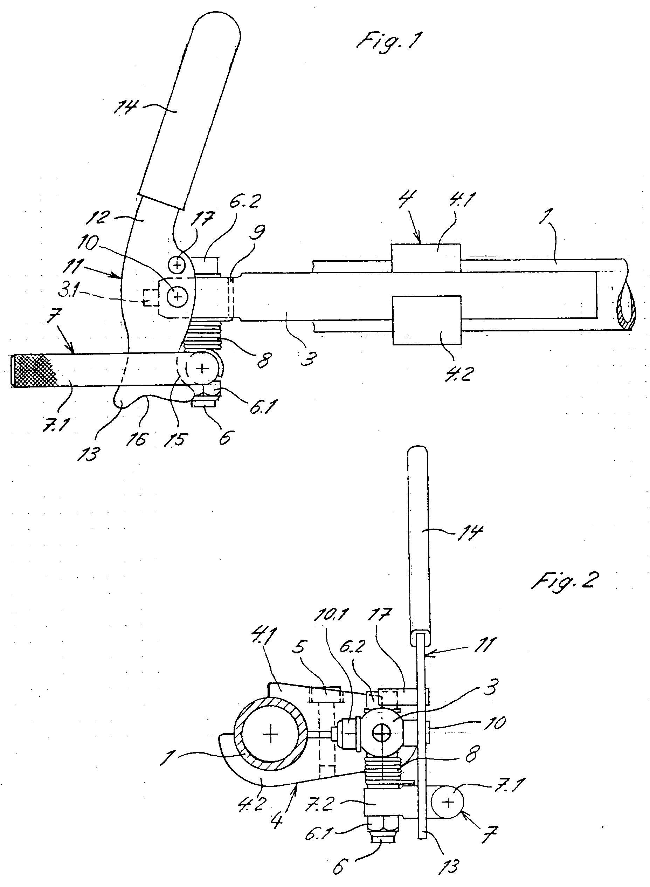

In den Fig. 1, 2 und 3 ist ein rohrförmiger Rahmenteil 1 eines Rollstuhls dargestellt, wobei neben dem Rahmen ein Hinterrad 2 des Rollstuhls (Fig. 3) mit zum Rahmen querstehender Drehachse umläuft. Ein zylindrischer, zum Rahmenteil 1 paralleler Träger 3 ist mittels einer Doppelklemmbride 4 mit dem Rahmenteil 1 verbunden. Die Doppelklemmbride 4 besteht aus einer oberen Klemmbacke 4.1 und einer unteren Klemmbacke 4.2, die mit einer Klemmschraube 5 gegeneinander verschraubt sind; zu diesem Zweck weist die eine Klemmbacke eine Durchgangsbohrung und die andere Klemmbacke eine Gewindebohrung auf. Die Länge des zylindrischen Trägers 3 beträgt ein Mehrfaches der Breite der Doppelklemmbride 4. Am einen Ende des zylindrischen Trägers 3 ist ein senkrecht zu diesem verlaufender Lagerbolzen 6, beispielsweise in Form einer Schraube, drehbar gelagert. Mit dem Lagerbolzen 6 ist ein stabförmiges, rechtwinklig abgebogenes Bremsglied 7 mittels einer gegen Lockerung gesicherten Mutter 6.1 drehfest verschraubt. Der eine, zum Bremsen des Rades 2 dienende Schenkel 7.1 des Bremsgliedes 7 ist mit einer Kordelung versehen. Der andere, am Lagerbolzen 6 befestigte, abgebogene Schenkel 7.2 des Bremsgliedes 7 wird von einem gebogenen, unteren Ende einer Torsionsfeder 8 umfasst, die zwischen dem Träger 3 und dem Bremsglied 7 auf dem Lagerbolzen 6 geführt wird. Das andere, obere Ende der Torsionsfeder 8 ist in einer Bohrung 9 des Trägers 3 gehalten.

Unmittelbar neben dem senkrecht gerichteten Lagerbolzen 6 ist im Träger 3 ein horizontal verlaufender, weiterer Lagerbolzen 10 drehbar gelagert. Dieser weist am einen Ende Gewinde auf und trägt eine gegen Lockerung gesicherte Mutter 10.1. Das andere Ende des Lagerbolzens 10 ist mit einem Stellhebel 11 fest verbunden, z.B. hartverlötet. Der eine, nach oben gerichtete Arm 12 des Stellhebels 11 trägt zwecks bequemer Betätigung einen aus Kunststoff bestehenden Griffbelag 14. Der andere, nach unten gerichtete und mit dem Bremsglied 7 zusammenwirkende Arm 13 weist zwei Ausnehmungen 15, 16 auf. Dabei ist die erste Ausnehmung 15 für die Aufnahme des in Freigabestellung befindlichen Bremsgliedes 7 und die zweite Ausnehmung 16 für die Aufnahme des in Bremsstellung befindlichen Bremsgliedes 7 bestimmt (in Fig. 3 strichpunktiert eingezeichnet). Durch die Torsionsfeder 8 ist das Bremsglied 7 gegen die Ausnehmungen 15, 16 bzw. gegen die Freigabestellung hin vorgespannt. Am nach oben gerichteten Arm 12 des Stellhebels 11 ist ein Anschlagstift 17 befestigt, der bei in der Freigabestellung befindlichem Bremsglied 7 an einen Kopf 6.2 des senkrecht verlaufenden Lagerbolzens 6 anschlägt. Nach unten ist die Bewegung des Anschlagstiftes 17 und damit des Stellhebels 11 durch einen am Ende des Trägers 3 axial vorstehenden Zapfen 3.1 begrenzt; in der normalen Bremsstellung, wenn das Bremsglied gegen ein Rad 2 drückt, wird der Zapfen 3.1 vom Anschlagstift 17 jedoch nicht ganz erreicht, sondern nur, wenn (bei unbenütztem Rollstuhl) das Rad abmontiert ist.

Bei der Montage der Feststellbremse am Rollstuhl-Rahmen wird zuerst die Doppelklemmbride 4 in eine gewünschte Position am Rahmenteil 1 gebracht. Danach kann durch Verschieben des Trägers 3 in axialer Richtung und Schwenken der Doppelklemmbride 4 die richtige Lage des Bremsgliedes 7 zum Hinterrad 2 des Rollstuhls eingestellt werden. Bei Bewegung des Stellhebels 11 in die Freigabestellung nimmt das Bremsglied 7 eine neben dem Hinterrad 2 etwa senkrecht zu dessen Achse verlaufende Stellung ein, wobei es unter der Wirkung der Torsionsfeder 8 in die erste Ausnehmung 15 des Stellhebels 11 einrastet (voll ausgezogene Linien in Fig. 3). Bei Bewegung des Stellhebels 11 in die Bremsstellung wird das Bremsglied 7 in eine Lage etwa parallel zur Hinterradachse geschwenkt, wobei es gegen das Rad 2 drückt und in die zweite Ausnehmung 16 des Stellhebels 11 einrastet (Bremsstellung, strichpunktierte Linien in Fig. 3).

Bei geeigneter Ausgestaltung des Stellhebels 11 und des Trägers 3 ist es auch möglich, anstelle der Torsionsfeder 8 z.B. eine Zugfeder mit entsprechender Rastwirkung zu verwenden.

Die Möglichkeit, die Lage der Klemmbride 4 entlang dem Rahmenteil 1 unabhängig von der Soll-Lage des Bremsgliedes wählen zu können, ist sehr vorteilhaft, weil die Platzverhältnisse am Rahmen oft sehr "gedrängt" sind, indem die Länge des Rahmenrohres z.B. durch die Sitzbespannung, Befestigung oder Lagerung weiterer Teile wie Seitenlehne, Streben usw. dicht belegt ist. Anderseits kann - bei gegebener Lage der Klemmbride entlang dem Rahmenrohr - durch Schwenken der Klemmbride sowie durch Längsverstellung und Drehen des Trägers 3 die Lage des Bremsgliedes bezüglich des Rades 2 in idealer Weise nicht nur dem Raddurchmesser, sondern auch der (je nach Fahrgeometrie unterschiedlichen) Radstellung angepasst werden. Die beschriebene Bremse lässt sich auch nach belieben rechts oder links am Rahmen montieren.

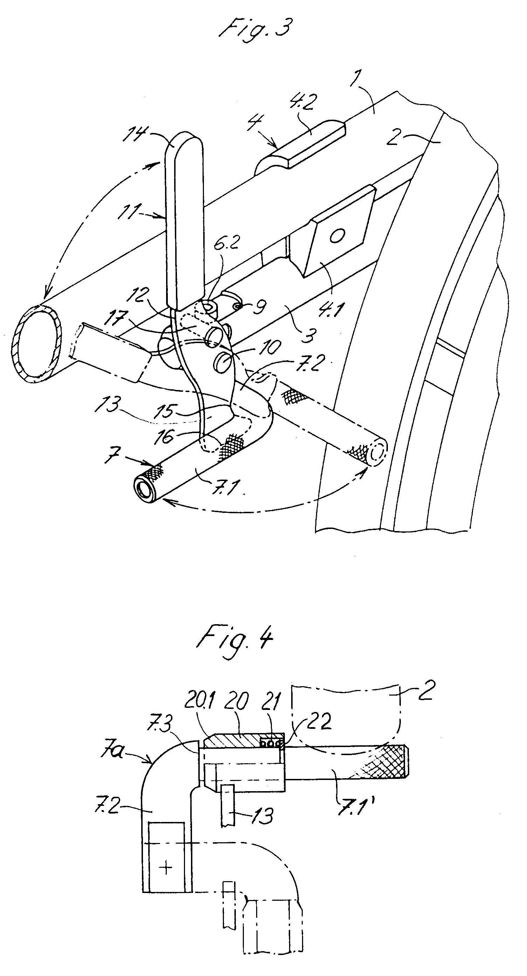

In der Fig. 4 ist eine Variante des Bremsgliedes 7a in der Bremsstellung dargestellt (Freigabestellung strichpunktiert angedeutet). Der mit dem Rad 2 zusammenwirkende Schenkel 7.1' ist beim Bremsglied 7a etwas dünner ausgeführt und bildet am Uebergang zum anderen Schenkel 7.2 eine Bundfläche 7.3. Auf einem an die Bundfläche 7.3 anschliessenden, glatten Abschnitt dieses Schenkels ist eine Hülse 20 drehbar und axial verschiebbar gelagert (halb geschnitten, halb in Ansicht dargestellt). In einer Eindrehung der Hülse 20 befindet sich, durch einen Sicherungsring 22 gesichert, eine Druckfeder 21, welche die Hülse gegen die Bundfläche 7.3 zu halten trachtet (siehe Freigabestellung, strichpunktiert). Am bundseitigen Ende weist die Hülse 20 eine Anschrägung 20.1 auf.

Wenn das Bremsglied 7a vom Arm 13 des Stellhebels 11 aus der Freigabestellung in die Bremsstellung geschwenkt wird, so läuft der Arm 13 auf die Hülse 20 auf, wobei diese sich von der Bundfläche 7.3 etwas abheben kann, was das seitliche Gleiten erleichtert. Wenn der Schenkel 7.1' gegen Ende der Schwenkbewegung auf das Rad 2 stösst und dadurch Widerstand erfährt, befindet sich der Arm 13 bereits auf der zylindrischen Aussenfläche der Hülse 20. Somit ist das Bremsglied zwischen dem Rad 2 und dem Arm 13 sicher verrastet. Da sich die Hülse 20 drehen kann, kommt der Arm 13 bei wiederholter Bremsbetätigung auf immer neuen Stellen der Hülse zum Tragen. Dank dieser Hülse wird somit die Betätigung erleichtert wie auch vorzeitiger Abnützung oder Schrammenbildung am Bremsglied vorgebeugt.

## Patentansprüche

1. Feststellbremse für einen Rollstuhl, mit einem auf ein Rollstuhl-Hinterrad (2) wirkenden, stabförmigen Bremsglied (7) und einem Stellhebel (11), die je drehbar an einem mit einem Rahmenteil (1) des Rollstuhls verbundenen Halter gelagert sind und die derart zusammenwirken, dass bei Betätigung des Stellhebels (11) das Bremsglied (7) aus einer Bremsstellung in eine Freigabestellung und umgekehrt bewegt wird, wobei das Bremsglied (7) in der Bremsstellung etwa parallel und in der Freigabestellung etwa senkrecht zur Achse des Hinterrades verläuft, dadurch **gekennzeichnet,**
- dass der genannte Halter einen zylindrischen, zum Rahmenteil (1) parallelen Träger (3) und eine Doppelklemmbride (4) aufweist, wobei der zylindrische Träger (3) über die Doppelklemmbride (4) längsverschiebbar und schwenkbar am Rahmenteil (1) befestigt ist und wobei Bremsglied (7) und Stellhebel (11) am einen Ende des Trägers (3) gelagert sind, und
- dass ein mit dem Bremsglied (7) zusammenwirkender Arm (13) des Stellhebels (11) zwei Ausnehmungen (15, 16) aufweist, gegen die das Bremsglied (7) mittels einer Feder (8) vorgespannt ist, wobei das Bremsglied in der Bremsstellung in die eine (16) und in der Freigabestellung in die andere (15) der beiden Ausnehmungen einrastet.

2. Feststellbremse nach Anspruch 1, dadurch gekennzeichnet, dass die Feder eine Torsionsfeder (8) ist, die zwischen dem Träger (3) und dem Bremsglied (7) auf einem das Bremsglied tragenden Bolzen (6) geführt ist, wobei das eine Ende der Torsionsfeder (8) am Bremsglied (7) angreift und das andere Ende am Träger (3) abgestützt ist.

3. Feststellbremse nach Anspruch 1, dadurch gekennzeichnet, dass die Länge des zylindrischen Trägers (3) ein Mehrfaches der Breite der Doppelklemmbride (4) beträgt.

4. Feststellbremse nach einem der Ansprüche 1 bis 3, dadurch gekennzeichnet, dass auf einem mit dem zu bremsenden Rad (2) zusammenwirkenden Schenkel (7.1') des Bremsgliedes (7a) eine Hülse (20) drehbar gelagert ist, an deren Umfang der mit dem Bremsglied zusammenwirkende Arm (13) des Stellhebels (11) in der Bremsstellung anliegt.

5. Feststellbremse nach Anspruch 4, dadurch gekennzeichnet, dass die Hülse (20) auf dem genannten Schenkel (7.1') begrenzt axial verschiebbar und durch Federmittel (21) gegen eine axiale Anschlagfläche (7.3) vorgespannt ist.

## Claims

1. A locking brake for a wheelchair, comprising a rodshaped braking element (7) which acts on a rear wheel (2) of the wheelchair, and a control lever (11), which are each rotatably mounted on a holder which is connected to a frame element (1) of the wheelchair and which co-act in such a manner that operation of the control lever (11) moves the braking element (7) from a braking position into a release position and vice versa, and that the braking element (7) extends in its braking position approximately parallel to the axis of the rear wheel and in its release position approximately vertical to the latter, **characterized in that**
- the mentioned holder comprises a cylindrical support (3) which is parallel to the frame element (1) and a double clamping bride (4), and that the cylindrical support (3) is attached to the frame element (1) so as to be longitudinally displaceable over the double clamping bride (4) and pivotable, and that the braking element (7) and the control lever (11) are mounted at the one end of the support (3); and
- an arm (13) of the control lever (11), which co-acts with the braking element (7), comprises two cutouts (15, 16), against which the braking element (7) is pretensioned by means of a spring (8), and that the braking element in its braking position is detented into the one (16) of the two cutouts and in its release position into the other (15) one.

2. A locking brake according to claim 1, **characterized in that** the spring is a torsion spring (8) which is guided between the support (3) and the braking element (7) on a bolt (6) which carries the braking element, and that the one end of the torsion spring (8) engages the braking element (7) and the other end is supported against the support (3).

3. A locking brake according to claim 1, **characterized in that** the length of the cylindrical support (3) is a multiple of the width of the double clamping bride (4).

4. A locking brake according to one of claims 1 to 3, **characterized in that** on a shank (7.1') of the braking element (7a) which co-acts with the wheel (2) to be braked is rotatably mounted a sleeve (20), to the periphery of which abuts the arm (13) of the control lever (11) which co-acts with the braking element.

5. A locking brake according to claim 4, **characterized in that** the sleeve (20) is to a limited extent axially displaceable on the aforementioned shank (7.1') and pretensioned by spring means (21) against an axial abutment surface (7.3)

## Revendications

1. Frein d'arrêt pour fauteuil roulant, comprenant un élément frein (7) en forme de tige agissant sur une roue arrière (2) du fauteuil roulant, et un levier de commande (11), logés de façon pivotante sur un support relié à une partie (1) du châssis du fauteuil roulant, et coopérant l'un avec l'autre de manière telle que, lors de l'actionnement du levier de commande (11), l'élément frein (7) soit entraîné d'une position de freinage vers une position de déblocage, et vice versa, l'élément frein (7) étant à peu près parallèle à l'axe de la roue arrière en position de freinage, et à peu près perpendiculaire à celui-ci en position de déblocage, caractérisé en ce que
- ledit support comprend une poutrelle cylindrique (3) parallèle à la partie (1) du châssis, ainsi qu'une bride de serrage double (4), la poutrelle cylindrique (3) étant fixée, par l'intermédiaire de la bride de serrage double (4), de façon longitudinalement coulissante et de façon pivotante sur la partie (1) du châssis, et l'élément frein (7) et le levier de commande (11) étant logés à une extrémité de la poutrelle (3), et en ce que
- un bras (13) du levier de commande (11), qui coopère avec l'élément frein (7), comporte deux creux (15, 16) en direction desquels l'élément frein (7) est précontraint au moyen d'un ressort (8), l'élément frein (7) s'enclenchant, en position de freinage, dans l'un (16) des deux creux, et dans l'autre (16) en position de déblocage.

2. Frein d'arrêt selon la revendication 1, caractérisé en ce que le ressort est un ressort de torsion (8) guidé entre la poutrelle (3) et l'élément frein (7) sur un axe (6) supportant l'élément frein, l'une des extrémités du ressort de torsion (8) agissant sur l'élément frein (7), et l'autre extrémité prenant appui sur la poutrelle (3).

3. Frein d'arrêt selon la revendication 1, caractérisé en ce que la longueur de la poutrelle cylindrique (3) représente un multiple de la largeur de la bride de serrage double (4).

4. Frein d'arrêt selon l'une des revendications 1 à 3, caractérisé en ce qu'une douille (20) est logée de façon libre en rotation sur l'une (7.1') des branches de l'élément frein (7a), qui coopère avec la roue à freiner (2), le bras (13) du levier de commande (11), qui coopère avec l'élément frein, s'appuyant, en position de freinage, sur la périphérie de cette douille.

5. Frein d'arrêt selon la revendication 4, caractérisé en ce que la douille (20) est, de façon limitée, axialement mobile sur ladite branche (7.1'), et est précontrainte en direction d'une face de butée axiale (7.3) grâce à des moyens à ressort (21).
